# EUROPEAN PATENT SPECIFICATION

(11) **EP 3 839 224 B1**
(45) Date of publication and mention of the grant of the patent: **30.07.2025**
(21) Application number: 20213664.4
(22) Date of filing: 14.12.2020
(51) Int. Cl.: F02B 21/00, B60T 17/02, F02B 37/00, F02B 33/22, F25J 1/00, F02B 29/00, F02D 9/06, F02B 37/16, F02M 35/10, B60T 17/06, F02D 17/02, F02D 41/00, F25J 1/02, F02D 41/12

(54) **VEHICULAR APPARATUS FOR PRODUCING COMPRESSED AIR**
FAHRZEUGVORRICHTUNG ZUR ERZEUGUNG VON DRUCKLUFT
APPAREIL VÉHICULAIRE POUR LA PRODUCTION D'AIR COMPRIMÉ

(30) Priority: 20.12.2019 IT 201900025036
(43) Date of publication of application: 23.06.2021
(73) Proprietor: FPT Industrial S.p.A., 10156 Torino (IT)
(72) Inventor: D'EPIRO, Clino, 10091 ALPIGNANO (TO) (IT)
(74) Representative: Studio Torta S.p.A.

(56) References cited:
- WO-A1-2015/154051
- WO-A1-98/55746
- US-A- 4 652 216
- US-A- 6 149 246

## Description

### TECHNICAL FIELD

The invention relates to a vehicular apparatus for producing and, preferably, storing compressed air, in particular installed in a heavy vehicle.

### KNOWN STATE OF THE ART

As it is known, numerous vehicles available in the market include components that process or convey compressed air while the vehicles themselves are running, such as auxiliary compressors for the production of compressed air and circuits for braking systems using compressed air.

Furthermore, it is known that the intake manifolds of some internal combustion engines, especially compression release engines, are supplied with air at a higher pressure than atmospheric pressure, in particular up to 3.5 bar.

Normally, the compressed air flowing through an intake manifold is supplied by means of a turbocharger, which, in turn, is supplied with the exhaust gases of the engine.

As a consequence, the pressure of the air supplied to the intake manifold is variable depending on the thermodynamic conditions of the exhaust gases and, hence, depending on the operating conditions of the engine.

Therefore, generally speaking, compressed air needs to be generated in vehicles when they are running.

More specifically, compressed air needs to be generated in vehicles in an improved manner compared to the prior art, in particular in terms of flexibility of use of the compressed air generated and/or in terms of pressure level.

Indeed, known vehicle components for the generation of compressed air are normally dedicated to the supply of one or more specific components, without any possibility of using the compressed air generated in a different manner.

Furthermore, the specific components mentioned above need to be supplied with a constant pressure, regardless of the operation of the engine.

Examples of known systems for producing compressed air are disclosed in published documents US4652216 A, WO19955746 A1, US6149246 A, or WO2015154051 A1.

The object of the invention is to fulfil at least one of the needs discussed above, preferably in a simple and economic fashion.

### SUMMARY OF THE INVENTION

The aforesaid object is reached by a vehicular apparatus for producing compressed air according to the invention, as defined in the appended claims.

The dependent claims define particular embodiments of the invention.

### BRIEF DESCRIPTION OF THE DRAWINGS

Embodiments of the invention will be described hereinafter by mere way of non-limiting example with reference to the accompanying drawings, wherein:
- figure 1 shows a diagram of some components of a vehicle provided with a vehicular apparatus according to the invention;
- figure 2 is a diagram showing a relation between quantities concerning the operation of two of the components of the figure 1; and
- figure 3 shows a variant of the vehicular apparatus.

### DETAILED DESCRIPTION OF THE INVENTION

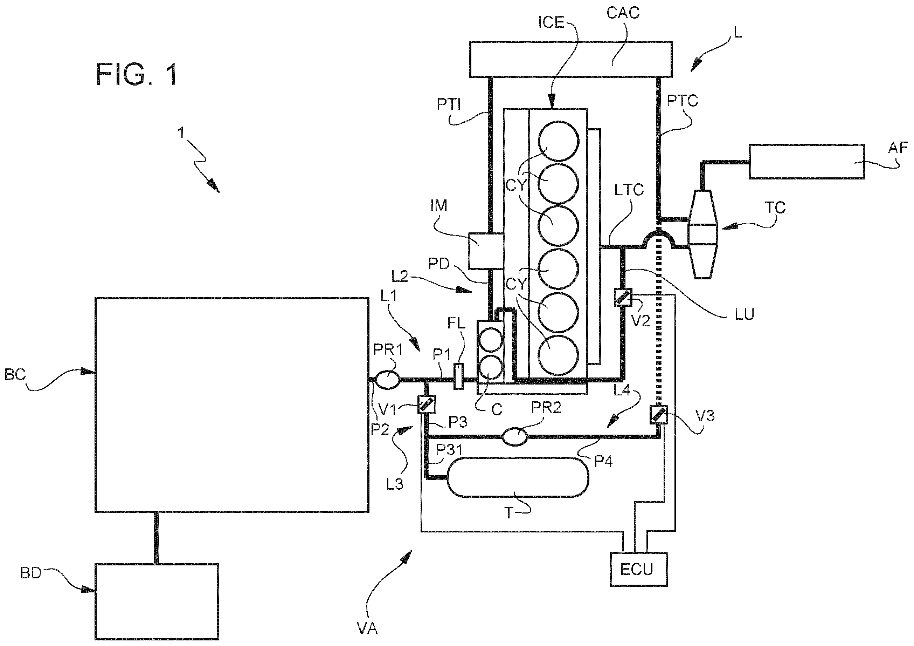

With reference to figure 1, reference number 1 indicates, as a whole, a vehicle, whose components are partly shown in a schematic manner.

More in detail, the vehicle 1 comprises:
- an internal combustion engine ICE having a plurality of cylinders CY;
- a turbocharger TC to supply the cylinders CY with compressed air;
- an air filter AF, through which the turbocharger TC sucks air;
- a heat exchanger CAC to cool the air compressed by the turbocharger TC;
- a braking device BD, which can be operated through pneumatic supply;
- a pneumatic supply circuit BC to supply the braking device (BD); and
- a compressor C to supply the pneumatic supply circuit BC;

The internal combustion engine ICE can be supplied with a mixture of air and fuel and preferably is a compression release engine, so that the fuel forming the supply mixture can specifically be Diesel fuel.

Otherwise, the engine ICE might not supplied with fuel and can be used as mere brake in driven mode.

In the operation with supply of fuel, the engine ICE produces hot exhaust gases, which expand in a turbine portion of the turbocharger TC, which consequently operates a compressor portion of the turbocharger TC.

The exhaust gases are conveyed from the engine ICE to the turbine portion by means of an exhaust line LTC.

The compressor portion sucks air through the air filter AF and compresses the air sucked in through the work of the turbine portion.

The pressure of the air compressed by the turbocharger TC basically depends on the work of the turbine portion and, hence, on the enthalpy of the exhaust gases upstream of the turbine portion, which, in turn, depends on the operating conditions of the engine.

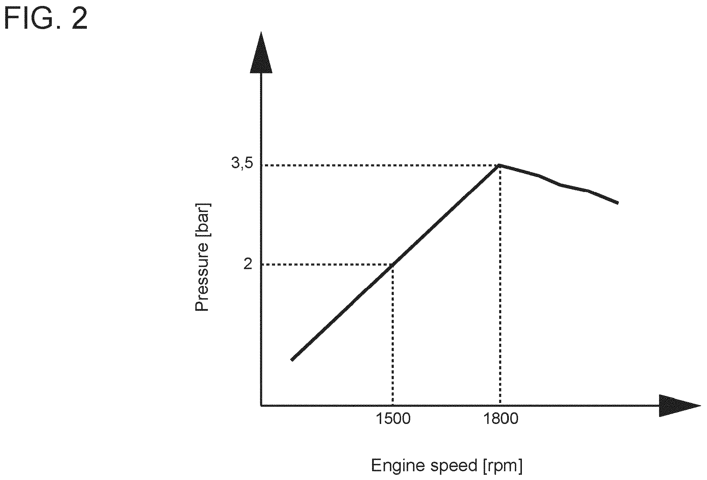

For example, figure 2 shows a development of the pressure of the air flowing out of the turbocharger TC as a function of the speed of the engine ICE. According to figure 2, a pressure of approximately 3 bar corresponds to a speed of the engine ICE of 1800 revolutions per minute. Similarly, a pressure of approximately 2 bar corresponds to a speed of the engine ICE of 1400 revolutions per minute.

More in general, the turbocharger TC can provide compressed air at pressure ranging from 1.1 bar to 3.5 bar, based on the speed and on the load of the engine ICE.

Before being supplied to the engine ICE as component of the mixture, the air compressed by the turbocharger TC flows through the heat exchanger CAC, so as to transfer heat to a heat exchange fluid, preferably ambient air or water, which is colder than the compressed air.

The engine ICE has an intake manifold IM, which receives the air compressed by the turbocharger TC and conveniently cooled by means of the heat exchanger CAC.

The braking device BD is known and comprises, for example, common brake calipers and relative brake discs. The braking device BD is configured to brake the vehicle 1, more precisely while it is running. Furthermore, the braking device BD can be operated through pneumatic supply. More in detail, the brake calipers are pressed against the relative brake discs due to the action of the supply compressed air.

Similarly, the pneumatic supply circuit BC is known and preferably comprises known valves and tanks, which, for this reason, are not shown.

The braking device BD is supplied by means of compressed air flowing out of the compressor C. In particular, the compressor is a volumetric compressor C and has a volumetric compression ratio, more in particular amounting to approximately 12.

With reference to figure 1, again, the vehicle 1 comprises a vehicular apparatus VA, which advantageously fulfils the aim of producing compressed air at higher pressures than the pressure needed for the operation of the pneumatic supply circuit BC, for example lying in the range of 10-20 bar.

The vehicular apparatus VA comprises the engine ICE, the compressor C, the turbocharger TC and the pneumatic supply circuit BC.

Furthermore, the vehicular apparatus VA comprises a supply line L, which pneumatically connects the air outlet of the turbocharger TC to the cylinders CY, so that the cylinders CY can be supplied with the compressed air flowing out of the turbocharger TC.

Specifically, the supply line L comprises the intake manifold IM of the engine ICE. More specifically, the supply line L also comprises the heat exchanger CAC.

In the embodiment shown herein, the supply line L comprises a first supply branch or duct PTC, which pneumatically connects the air outlet of the turbocharger TC to an inlet of the heat exchanger CAC, as well as a second supply branch or duct PTI, which pneumatically connects an outlet of the heat exchanger CAC to the intake manifold IM.

Furthermore, the vehicular apparatus VA comprises a supply line L1, which pneumatically connects the outlet of the compressor C to the pneumatic supply circuit BC, so that the latter can supply the braking device BD with the air compressed by the compressor C.

More in detail, with reference to figure 1, the supply line L1 comprises a first supply branch or duct P1, which is connected to the outlet of the compressor C, and a second supply branch or duct P2, which is connected to the pneumatic supply circuit BC in order to supply the latter with the air flowing out of the compressor C.

Specifically, the ducts P1 and P2 are joined to one another in a direct manner.

Conveniently, the duct P2 comprises a pressure reducer PR1, which reduces the pressure of the air flowing out of the compressor C up to a reference pressure suited for the supply of the braking device BD, namely equal to the operating pressure of the pneumatic supply circuit BC.

The pressure reducer PR1 is arranged immediately upstream of the supply circuit BC, according to the air flow direction from the outlet of the compressor C towards the supply circuit BC.

Advantageously, the vehicular apparatus VA comprises a supply line L2, which pneumatically connects the inlet of the compressor C to the supply line L, so that the air compressed by the turbocharger TC can supply the compressor C.

In this way, the compressor C receives, at the inlet, air at a higher pressure than atmospheric pressure.

Therefore, the compressor C provides, at the outlet, air compressed at higher pressures than the operating pressure of the pneumatic supply circuit BC.

Specifically, when the compressor C receives air compressed by the turbocharger TC at a pressure ranging from 2.8 to 3.2 bar, the compressor C produces, at the outlet, compressed air at a pressure ranging from 33 to 40 bar.

Conveniently, the compressor C differs from known compressors, which exclusively supply braking systems, only in that it is structurally suited to resist higher pressures than the operating pressure of the pneumatic supply circuit BC.

As a matter of fact, for example, the compressor C has a volumetric compression ratio that is identical to that of similar known compressors used to supply relative braking systems. Indeed, it is suited, with the engine not in supercharging conditions, to provide known braking systems with the same usable pressure.

In the embodiment shown herein, the supply line L2 connects the inlet of the compressor C to the intake manifold IM, so that the compressor C can suck air from the intake manifold IM.

In particular, the supply line L2 comprises one single supply branch or duct PD, which connects the intake manifold IM to the inlet of the compressor C.

For example, the compressor C can be operated by means of the engine ICE, in particular in an intermittent manner by means of a clutch (not shown), which can be controlled so as to couple to the engine ICE to the compressor C. When the compressor C is operating, namely when the compressor C and the engine ICE are coupled through the clutch, the compressor C suck air from the intake manifold IM through the duct PD.

Preferably, the compressor C is operated when the pneumatic supply circuit BC needs compressed air to supply the braking device BD. This can happen, for example, when the driver of the vehicle 1 requests the operation of the braking device BD.

Furthermore, in the embodiment shown herein, the vehicular apparatus VA comprises a tank T and a supply line L3, which pneumatically connects the outlet of the compressor C to the tank T, so that the tank T can receive the air compressed by the compressor C and store said air on the inside.

By so doing, the tank T defines a source of compressed air at a high/medium pressure, which can be used in a generic manner, namely adapted to many uses.

In the embodiment shown herein, the supply line L3 comprises the duct P1 and a further supply branch or duct P3, which is joined to the duct P1, specifically in a direct manner, and ends in an inlet mouth of the tank T. In particular, the duct P3 is also joined to the duct P2, so as to form a node with the ducts P1 and P2.

The vehicular apparatus VA further comprises a valve V1 to adjust the compressed air flow flowing in and/or out of the compressor C towards the tank T along the duct P3. In order to control the valve V1, the vehicular apparatus VA comprises a control unit ECU connected to the valve V1.

In particular, the valve V1 is arranged in a point of the duct P3.

More in particular, the valve V1 is an on-off valve, so that it can be controlled, for example by means of the control unit ECU, in order to allow the air flow to flow towards the tank T along the duct P3 or prevent it from doing so.

Alternatively, the valve V1 could be a three-way valve arranged in the area of the node formed by the ducts P1, P2, P3.

When the air flow is prevented from flowing towards the tank T, all the air flowing out of the compressor C can be used by the sole supply circuit BC through the duct P2. Otherwise, the air flowing out of the compressor C is divided, specifically in a natural manner, partly towards the supply circuit BC and partly towards the tank T.

Preferably, the valve V1 is controlled so as to allow the air flow to flow towards the tank T when the engine ICE operates under engine brake conditions, for example when the vehicle 1 is driving downhill. Indeed, under engine brake conditions, the cylinders CY do not receive fuel and the combustion does not take place, so that the supercharging of the engine ICE by means of the turbocharger TC can conveniently be used to produce compressed air to be stored in the tank T at a high pressure. In this case, therefore, the compressor C is coupled to the engine ICE by means of the aforesaid clutch.

Furthermore, in order to exploit the engine brake condition, the vehicular apparatus VA can comprise the exhaust line LTC and a further supply line LU, which is designed to connect the inlet of the compressor C to the exhaust line LTC, which, under engine brake conditions, is flown through by substantially pure air, subjected to cooling of the air itself.

The supply line LU comprises a valve V2 to adjust a gas flow from the exhaust line LTC towards the inlet of the compressor C. The valve V2 is connected to the control unit ECU and is controlled by the latter.

In particular, the valve V2 is an on-off valve, so that it can be controlled, for example by means of the control unit ECU, in order to allow the gas flow to flow towards the inlet of the compressor C or prevent it from doing so.

The valve V2 allows the gas flow to flow when the internal combustion engine ICE operates under engine brake conditions; in this case, the combustion does not take place and the exhaust line LTC is substantially flown through by compressed air.

In this way, the air compressed by engine ICE, which brakes the vehicle 1, can be used by the compressor C. More in detail, the compressed air flowing along the exhaust line LTC reaches a higher pressure than the pressure of the air in the intake manifold IM. In particular, the compressed air flowing along the exhaust line LTC can reach pressures up to 7 bar, so that the compressor C is capable of providing compressed air at a pressure that can reach 85 bar and beyond.

In order to eliminate possible impurities in the compressed air flowing along the exhaust line LTC, the supply line L1 conveniently comprises a filter FL, which is adapted to hold back impurities, such as lubricant oil residues.

In addition, advantageously, the vehicular apparatus VA comprises a further supply line L4, which is designed to connect the tank T to the supply line L.

In this way, the intake manifold IM can be supplied with compressed air stored inside the tank T.

More in detail, the supply line L4 comprises a portion P31, which is also part of the duct P3, and a further supply branch or duct P4, which is joined to the duct P3 at an end of the portion P31, which, therefore, forms a node with the duct P4.

Hence, the outlet of the compressor C can also be connected to the supply line L by means of the duct P4.

Furthermore, according to the embodiment shown herein, the aforesaid inlet mouth T also serves as an outlet of the tank T.

Conveniently, the supply line L4 further comprises a pressure reducer PR2, which has a function that is similar to the one of the pressure reducer PR1.

Specifically, the pressure reducer PR2 is arranged in the duct P4 and reduces the pressure of the air directed towards the supply line L along the duct P4.

In particular, the pressure reducer PR2 reduces the pressure up to a value that is suited for the operation of potential users arranged downstream (for example, the supply line L to generate a supercharging under particular operating conditions, for example under low rpm conditions of the engine ICE, in which the turbocharger TC provides compressed air at a reduced pressure compared to when the engine ICE runs at a large number of revolutions per minute.

The vehicular apparatus VA further comprises a valve V3 to adjust the air flow flowing out of the tank T towards the supply line L along the duct P4. The valve V3 is connected to the control unit ECU and is controlled by the latter.

In particular, the valve V3 is arranged in a point of the duct P4.

Preferably, the valve V3 is an on-off valve, so that it can be controlled, for example by means of the control unit ECU, in order to allow the air flow to flow towards the supply line L along the duct P4 or prevent it from doing so.

Alternatively, the valve V3 could be a control valve.

Based on the adjustment of the valves V1, V3, the air flow flowing out of the compressor C can be divided, specifically in a natural manner, among the supply circuit BC, the tank T and the intake manifold IM through the supply line L4.

More precisely, when the valve V3 is closed, the air flowing out of the compressor C can be used by the sole supply circuit BC and for the pressurization of the tank T, depending on the opening of the valve V1, as already mentioned above.

In particular, all the air in the duct P3 is used to pressurize the tank T. Otherwise, the air in the duct P3 can be used for the supercharging in the intake manifold IM.

On the other hand, when the valve V1 prevents the air flow from flowing towards the tank T, the latter can continue providing the intake manifold IM with a supercharging.

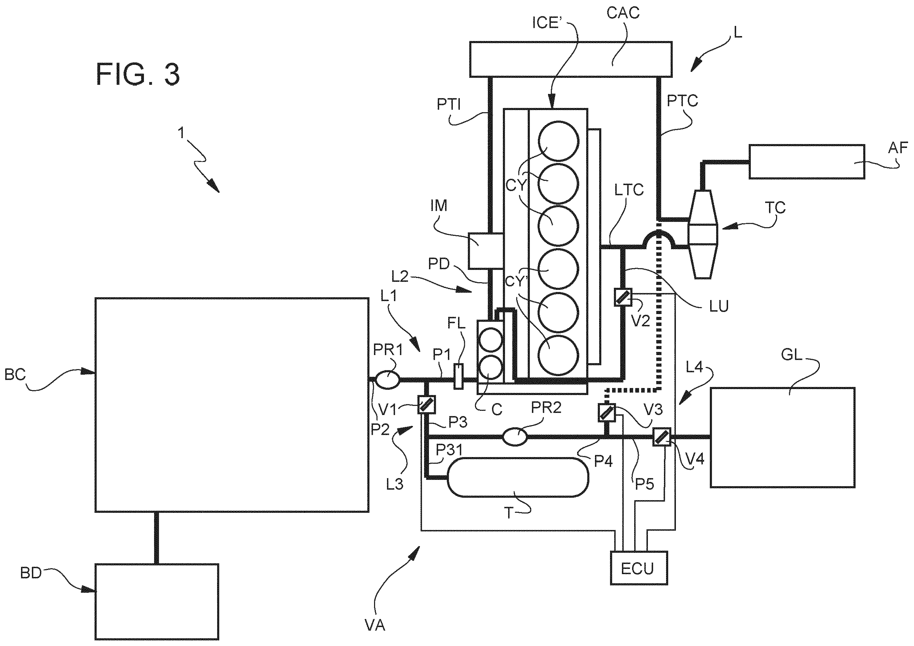

A variant of the vehicular apparatus VA will now be described with reference to figure 3, in which it is indicated by the reference symbol VA'. The vehicular apparatus VA' is similar to the vehicular apparatus VA, so that only what distinguishes it from vehicular apparatus VA will be described in detail. Corresponding components between the vehicular apparatus VA and the vehicular apparatus VA' will conveniently be indicated with the same reference symbols.

More precisely, instead of the engine ICE, the vehicular apparatus VA' comprises a split-cycle engine ICE' having the intake manifold IM as well as compression cylinders CY', where the compression of the air of the air-fuel mixture takes place, though not the ignition and expansion of the mixture. In other words, the fuel is not injected into the compression cylinders CY'.

The compression cylinders CY' communicate with the cylinders CY, which, in this case, are expansion cylinders, through a connection line (not shown), so that the cylinders CY can receive the air compressed in the compression cylinders CY', to which fuel is added in order to obtain the mixture as well as the combustion and expansion thereof. For example, the connection line could have a main branch, which receives compressed air from each compression cylinder CY' and distributes compressed air to each cylinder CY.

According to a variant which is not shown herein, the vehicular apparatus VA' comprises a further supply line, which is designed to connect the connection line to an inlet of the compressor C, namely to take compressed air from the cylinders CY' and convey said compressed air to the compressor C. This supply line could be connected to the main branch of the connection line and/or be similar, from a constructive point of view, to the supply line L2.

According to a further variant which is not shown herein, the compressor C and the supply line L2 could be absent, so that the connection line described above or the supply line LU would be joined to the supply line L1 in order to supply the pneumatic supply circuit BC and the tank T. In this variant, the circuit BC can be supplied with the air stored in tank T or directly with the air compressed by the engine ICE or by the engine ICE'. More precisely, in case of the engine ICE', air is compressed in the compression cylinders CY'.

According to figure 3, the vehicular apparatus VA' comprises a gas liquefaction assembly GL, which is schematically shown, to liquefy at least one air component, for example pure nitrogen or air itself.

The gas liquefaction assembly GL preferably operates according to a (known) reversed Brayton-Joule cycle with a thermal expansion valve.

The compressed air needed for the completion of the reversed Brayton-Joule cycle is supplied to the gas liquefaction assembly GL by the tank T, so that the gas liquefaction assembly GL is not provided with compressors.

With reference to figure 3, the vehicular apparatus VA' comprises a supply line L5, which allows the compressed air stored in the tank T to reach and supply the gas liquefaction assembly GL.

Specifically, the supply line L5 is joined to the supply line L4; more precisely, the supply line L5 comprises a supply branch or duct P5, which is joined to the duct P4, in particular in the area of a point upstream of the valve V3, according to the air flow direction from the tank T towards the supply line L, namely towards the intake manifold IM.

The vehicular apparatus VA' further comprises a valve V4 to adjust the air flow towards the gas liquefaction assembly GL along the duct P5. The valve V4 is connected to the control unit ECU and is controlled by the latter.

In particular, the valve V4 is arranged in a point of the duct P5.

Preferably, the valve V4 is an on-off valve, so that it can be controlled, for example by means of the control unit ECU, in order to allow the air flow to flow from the duct P4 towards the gas liquefaction assembly GL along the duct P5 or prevent it from doing so.

Alternatively, the valve V4 could be a three-way valve arranged in the area of the joining point joining the ducts P4, P5.

When the air flow is prevented from flowing towards the gas liquefaction assembly GL, all the air flowing along the duct P4 can be used by the intake manifold IM, depending on the opening of the valve V3.

Otherwise, when the air flow is prevented from flowing towards the intake manifold IM by the valve V3, all the air flowing along the duct P4 can be used by the gas liquefaction assembly GL, depending on the opening of the valve V4.

Owing to the above, the advantages of the vehicular apparatus VA and VA' according to the invention are evident.

The vehicular apparatus VA produces compressed air in a simple and economic fashion, using devices already present in known vehicles. Indeed, many vehicles are provided with a compressor like the compressor C to supply a braking device. To this regard, the connection between the intake manifold IM and the inlet of the compressor C is simple and economic to be manufactured.

Thanks to the possibility of supercharging the intake manifold IM through the air stored in the tank T, the engine ICE can reach better performances under slow running conditions.

Thanks to the vehicular apparatus VA', liquefied gases can be produced in an economic and efficient manner; indeed, the gas liquefaction assembly GL does not need a dedicated compressor, but uses the compressed air flowing out of the compressor C, if necessary stored in the tank T.

The gas liquefaction assembly GL can be used to produce and store air in the liquid state, which occupies a smaller volume compared to the same quantity of air in the gaseous state; therefore, a source of energy, represented by the air in the liquid state, can be stored, in particular at temperatures close to -190 °C, in relatively small volumes. Like the air stored in the tank T, said air or gas in the liquid state can have different uses, if necessary on the outside of the vehicle 1. In particular, the excess air or gas in the liquid state which is not used can be transferred, when the vehicle 1 is parked, so as to be used in other vehicles or stationary apparatuses designed for a profitable use thereof.

Another advantage of the vehicular apparatus VA', as already mentioned above, lies in the fact that compressors like the compressor C normally are already present in vehicles in order to supply relative braking devices.

The gases liquefied by the gas liquefaction assembly GL can have a generic use, if necessary on the outside of the vehicle 1. However, a particularly advantageous use of liquefied gases lies in the fact that they can be injected into the compression cylinders CY' of the engine ICE' in order to limit the temperature of the air during the compression, thus reducing the compression work.

Finally, the vehicular apparatuses VA, VA' according to the invention can be subjected to changes and variants, which, though, do not go beyond the scope of protection set forth in the appended claims.

In particular, the configuration of the supply lines L, L1, L2, L3, L4 could be different from the one described and shown herein.

Furthermore, the compressor C could directly supply one device or both devices between the intake manifold IM and the gas liquefaction assembly GL.

Indeed, the gas liquefaction assembly GL, the intake manifold IM and the tank T are, in general, gas receiver devices, which are designed to receive a compressed gas for the use or storage thereof.

Furthermore, the apparatuses VA, VA' could comprise any component shown in the relative figures 1 and 3.

Furthermore, the turbocharger TC could be replaced by an electrically powered compressor or, more in general, by any supercharging compressor to supply compressed air to the engines ICE, ICE'.

The operation of the compressor could also be continuous instead of being intermittent; in this case, in order to reduce unnecessary work, traditional measures can be adapted, such as openable dead volumes on the cylinder head, which reduce the treated air flow rate.

## Claims

1. A vehicular apparatus (VA; VA') for producing compressed air comprising:
- an internal combustion engine (ICE; ICE');
- a pneumatic supply circuit (BC) configured to supply a braking device (BD) operable by pneumatic supply;
- first compression means (TC, CY, CY') for compressing air;
- second compression means (C, CY, CY') for compressing air compressed by said first compression means (TC, CY, CY');
- first supply means (L, L2, IM, LU) configured to draw compressed air downstream of said first compression means (TC, CY, CY') and supply the drawn compressed air to said second compression means (C, CY, CY');
- second supply means (L1, LU) configured to draw compressed air downstream of said second compression means (C, CY, CY') and supply the drawn compressed air to the pneumatic supply circuit (BC);
wherein said second compression means (C, CY, CY') comprise a volumetric compressor (C) to directly supply the pneumatic supply circuit (BC); said second supply means (L1, LU) comprising a first supply line (L1) that pneumatically connects an outlet of the compressor (C) to the pneumatic supply circuit (BC);
**characterized by** further comprising:
- a gas receiver device (T, IM, GL) different from the pneumatic supply circuit (BC) and adapted to receive a compressed gas for the use or storage thereof;
- third supply means (L3) configured to draw compressed air downstream of said second compression means (C, CY, CY') and supply the drawn compressed air to the gas receiver device (T, IM, GL),
wherein said third supply means (L3) comprising a third supply line that pneumatically connects the outlet of the compressor (C) to the gas receiver device (T, IM, GL), so that the gas receiver device (T, IM, GL) can receive air in output from the compressor (C),wherein the first supply line (L1) comprises a pressure regulator (PR1) for reducing a first pressure of the air in output from the compressor (C) to a second pressure lower than the first pressure and suitable for the operation of the pneumatic supply circuit (BC).

2. The vehicular apparatus according to claim 1, wherein the engine (ICE; ICE') comprises a plurality of cylinders (CY, CY') and wherein said first compression means comprise a booster compressor (TC);
the first supply means (L, L2, IM, LU) comprising a fourth supply line (L) that pneumatically connects an outlet of the booster compressor (TC) to at least one of the cylinders (CY; CY');
the first supply means (L2, IM, LU) comprising, furthermore, a second supply line (L2) that pneumatically connects an inlet of the compressor (C) to the fourth supply line (L).

3. The vehicular apparatus according to claim 2, wherein the fourth supply line (L) comprises an intake manifold (IM) of the engine (ICE; ICE'); the second supply line (L2) connecting the inlet of the compressor (C) to the intake manifold (IM).

4. The vehicular apparatus according to any one of the preceding claims, furthermore comprising an exhaust line (LTC) for expelling exhaust gas from the engine (ICE; ICE');
the first supply means (L2, LU) comprising a fourth supply line (LU) that pneumatically connects the inlet of the compressor (C) to the exhaust line (LTC).

5. The vehicular apparatus according to any one of the preceding claims, wherein the third supply line (L1) comprises a first valve (V1) that can be controlled to adjust an airflow in output from the compressor (C) towards the gas receiver device (T, IM, GL).

6. The vehicular apparatus according to claim 1, wherein the engine (ICE; ICE') comprises a plurality of cylinders (CY, CY') forming part of said second compression means (C, CY, CY').

7. The vehicular apparatus according to any one of the preceding claims, wherein the gas receiver device (T, IM, GL) comprises a tank (T) for storing the air compressed by the second compression means (C, CY, CY').

8. The vehicular apparatus according to claim 7, furthermore comprising a sixth supply line (L4) that connects the tank (T) to at least one further gas receiver device (IM, GL), comprising a user device for the air stored in the tank (T).

9. The vehicular apparatus according to claim 8, wherein the sixth supply line (L4) comprises a second valve (V3, V4) that can be controlled to adjust an airflow in output from the tank (T) towards the user device.

10. The vehicular apparatus according to claim 8 or 9, wherein the further gas receiver device (IM, GL) comprises a gas liquefaction assembly (GL) for the liquefaction of at least an air component.

11. The vehicular apparatus according to any one of the claims from 8 to 10, wherein the sixth supply line (L4) comprises a further pressure regulator (PR2) for reducing a third pressure of the air stored in the tank (T) to a fourth pressure lower than the third pressure and suitable for supplying the user device.

12. The vehicular apparatus according to any one of the preceding claims, wherein the internal combustion engine (ICE') is of the split-cycle type.

13. The vehicular apparatus according to claim 12, wherein the engine (ICE') comprises:
- at least one expansion cylinder (CY) for the combustion and expansion of a mixture of compressed air and fuel;
- at least a compression cylinder (CY') forming part of said first compression means (TC, CY'); and
- a connection line for pneumatically connecting the compression cylinder (CY') to the expansion cylinder (CY), so that the expansion cylinder (CY) can receive air compressed by the compression cylinder (CY');
the first supply means (L, L2, IM, LU) comprising a seventh supply line that pneumatically connects the second compression means (C) to the connection line, so that the second compression means can be supplied with compressed air that flows through the connection line.

14. The vehicular apparatus according to claim 12, wherein the engine (ICE') comprises:
- at least one expansion cylinder (CY) for the combustion and expansion of a mixture of compressed air and fuel;
- at least a compression cylinder (CY') forming part of said second compression means (CY, CY'); and
- a connection line for pneumatically connecting the compression cylinder (CY') to the expansion cylinder (CY), so that the expansion cylinder (CY) can receive air compressed by the compression cylinder (CY');
the second supply means (L, L2, IM, LU) comprising an eighth supply line that pneumatically connects the pneumatic supply circuit (BC) to the connection line, so that the pneumatic supply circuit (BC) can be supplied with compressed air that flows through the connection line.

15. A vehicle (1) comprising a vehicular apparatus (VA; VA') according to any one of the preceding claims.

## Patentansprüche

1. Eine Fahrzeugvorrichtung (VA; VA') zur Erzeugung von Druckluft, umfassend:
einen Verbrennungsmotor (ICE; ICE');
einen pneumatischen Versorgungskreislauf (BC), der eingerichtet ist, eine durch Druckluft betriebene Bremsvorrichtung (BD) zu versorgen;
erste Verdichtungsmittel (TC, CY, CY') zum Verdichten von Luft;
zweite Verdichtungsmittel (C, CY, CY') zum Verdichten der von den ersten Verdichtungsmitteln (TC, CY, CY') verdichteten Luft;
erste Versorgungseinrichtungen (L, L2, IM, LU), die eingerichtet sind, verdichtete Luft stromabwärts der ersten Verdichtungsmittel (TC, CY, CY') abzuziehen und die abgezogene verdichtete Luft den zweiten Verdichtungsmitteln (C, CY, CY') zuzuführen;
zweite Versorgungseinrichtungen (L1, LU), die eingerichtet sind, verdichtete Luft stromabwärts der zweiten Verdichtungsmittel (C, CY, CY') abzuziehen und die abgezogene verdichtete Luft dem pneumatischen Versorgungskreislauf (BC) zuzuführen;
wobei die zweiten Verdichtungsmittel (C, CY, CY') einen volumetrischen Kompressor (C) umfassen, um den pneumatischen Versorgungskreislauf (BC) direkt zu versorgen; wobei die zweiten Versorgungseinrichtungen (L1, LU) eine erste Versorgungsleitung (L1) umfassen, die einen Ausgang des Kompressors (C) pneumatisch mit dem pneumatischen Versorgungskreislauf (BC) verbindet;
**dadurch gekennzeichnet, dass**:
eine Gasspeichervorrichtung (T, IM, GL), die vom pneumatischen Versorgungskreislauf (BC) unterschiedlich ist und dazu eingerichtet ist, verdichtetes Gas zum Nutzen oder Speichern derselben aufzunehmen;
dritte Versorgungseinrichtungen (L3), die eingerichtet sind, verdichtete Luft stromabwärts der zweiten Verdichtungsmittel (C, CY, CY') abzuziehen und die abgezogene verdichtete Luft der Gasspeichervorrichtung (T, IM, GL) zuzuführen;
wobei die dritten Versorgungseinrichtungen (L3) eine dritte Versorgungsleitung umfassen, die den Ausgang des Kompressors (C) pneumatisch mit der Gasspeichervorrichtung (T, IM, GL) verbindet, so dass die Gasspeichervorrichtung (T, IM, GL) Luft aus dem Kompressor (C) aufnehmen kann, wobei die erste Versorgungsleitung (L1) einen Druckregler (PR1) umfasst, um einen ersten Druck der Luft aus dem Kompressor (C) auf einen zweiten, niedrigeren Druck zu reduzieren, der für den Betrieb des pneumatischen Versorgungskreislaufs (BC) geeignet ist.

2. Die Fahrzeugvorrichtung nach Anspruch 1, wobei der Motor (ICE; ICE') eine Vielzahl von Zylindern (CY, CY') umfasst und wobei die ersten Verdichtungsmittel einen Booster-Kompressor (TC) umfassen;
wobei die ersten Versorgungseinrichtungen (L, L2, IM, LU) eine vierte Versorgungsleitung (L) umfassen, die einen Ausgang des Booster-Kompressors (TC) pneumatisch mit mindestens einem der Zylinder (CY, CY') verbindet;
wobei die ersten Versorgungseinrichtungen (L2, IM, LU) ferner eine zweite Versorgungsleitung (L2) umfassen, die einen Einlass des Kompressors (C) pneumatisch mit der vierten Versorgungsleitung (L) verbindet.

3. Die Fahrzeugvorrichtung nach Anspruch 2, wobei die vierte Versorgungsleitung (L) einen Ansaugkrümmer (IM) des Motors (ICE; ICE') umfasst, wobei die zweite Versorgungsleitung (L2) den Einlass des Kompressors (C) mit dem Ansaugkrümmer (IM) verbindet.

4. Die Fahrzeugvorrichtung nach einem der vorhergehenden Ansprüche, ferner umfassend eine Abgasleitung (LTC) zum Ausstoßen von Abgas aus dem Motor (ICE; ICE');
wobei die ersten Versorgungseinrichtungen (L2, LU) eine vierte Versorgungsleitung (LU) umfassen, die den Einlass des Kompressors (C) pneumatisch mit der Abgasleitung (LTC) verbindet.

5. Die Fahrzeugvorrichtung nach einem der vorhergehenden Ansprüche, wobei die dritte Versorgungsleitung (L1) ein erstes Ventil (V1) umfasst, welches steuerbar ist, um einen Luftstrom vom Kompressor (C) zur Gasspeichervorrichtung (T, IM, GL) einzustellen.

6. Die Fahrzeugvorrichtung nach Anspruch 1, wobei der Motor (ICE; ICE') eine Vielzahl von Zylindern (CY, CY') umfasst, die einen Teil der zweiten Verdichtungsmittel (C, CY, CY') bilden.

7. Die Fahrzeugvorrichtung nach einem der vorhergehenden Ansprüche, wobei die Gasspeichervorrichtung (T, IM, GL) einen Tank (T) umfasst, um Luft zu speichern, die durch die zweiten Verdichtungsmittel (C, CY, CY') verdichtet wurde.

8. Die Fahrzeugvorrichtung nach Anspruch 7, ferner umfassend eine sechste Versorgungsleitung (L4), die den Tank (T) mit mindestens einer weiteren Gasspeichervorrichtung (IM, GL) verbindet, die eine Nutzereinrichtung für die im Tank (T) gespeicherte Luft umfasst.

9. Die Fahrzeugvorrichtung nach Anspruch 8, wobei die sechste Versorgungsleitung (L4) ein zweites Ventil (V3, V4) umfasst, das steuerbar ist, um einen Luftstrom vom Tank (T) zur Nutzereinrichtung einzustellen.

10. Die Fahrzeugvorrichtung nach Anspruch 8 oder 9, wobei die weitere Gasspeichervorrichtung (IM, GL) eine Gasverflüssigungseinrichtung (GL) zum Verflüssigen mindestens einer Luftkomponente umfasst.

11. Die Fahrzeugvorrichtung nach einem der Ansprüche 8 bis 10, wobei die sechste Versorgungsleitung (L4) einen weiteren Druckregler (PR2) umfasst, der einen dritten Druck der im Tank (I) gespeicherten Luft auf einen vierten, niedrigeren Druck reduziert, die für die Versorgung der Nutzereinrichtung geeignet ist.

12. Die Fahrzeugvorrichtung nach einem der vorhergehenden Ansprüche, wobei der Verbrennungsmotor (ICE') vom Split-Cycle-Typ ist.

13. Die Fahrzeugvorrichtung nach Anspruch 12, wobei der Motor (ICE') umfasst:
mindestens einen Expansionszylinder (CY) zum Verbrennen und Expandieren eines Gemisches aus verdichteter Luft und Kraftstoff;
mindestens einen Kompressionszylinder (CY'), der einen Teil der ersten Verdichtungsmittel (TC, CY') bildet; und
eine Verbindungsleitung zum pneumatischen Verbinden des Kompressionszylinders (CY') mit dem Expansionszylinder (CY), so dass der Expansionszylinder (CY) Luft aufnehmen kann, die durch den Kompressionszylinder (CY') verdichtet wurde,
wobei die ersten Versorgungseinrichtungen (L, L2, IM, LU) eine siebte Versorgungsleitung umfassen, die die zweiten Verdichtungsmittel mit der Verbindungsleitung verbindet, so dass die zweiten Verdichtungsmittel mit verdichteter Luft versorgt werden können, die durch die Verbindungsleitung strömt.

14. Die Fahrzeugvorrichtung nach Anspruch 12, wobei der Motor (ICE') umfasst:
mindestens einen Expansionszylinder (CY) zum Verbrennen und Expandieren eines Gemisches aus verdichteter Luft und Kraftstoff;
mindestens einen Kompressionszylinder (CY'), der einen Teil der zweiten Verdichtungsmittel (CY, CY') bildet;
mindestens einen Kompressionszylinder (CY'), der einen Teil der zweiten Verdichtungsmittel (CY, CY') bildet; und
eine Verbindungsleitung zum pneumatischen Verbinden des Kompressionszylinders (CY') mit dem Expansionszylinder (CY), so dass der Expansionszylinder (CY) Luft aufnehmen kann, die durch den Kompressionszylinder (CY') verdichtet wurde,
wobei die zweiten Versorgungseinrichtungen (L, L2, IM, LU) eine achte Versorgungsleitung umfassen, die den pneumatischen Versorgungskreislauf (BC) mit der Verbindungsleitung verbindet, so dass der pneumatischen Versorgungskreislauf (BC) mit verdichteter Luft versorgt werden kann, die durch die Verbindungsleitung strömt.

15. Ein Fahrzeug (1) umfassend eine Fahrzeugvorrichtung (VA; VA') nach einem der vorhergehenden Ansprüche.

## Revendications

1. Appareil véhiculaire (VA ; VA') pour la production d'air comprimé comprenant :
- un moteur à combustion interne (ICE ; ICE') ;
- un circuit d'alimentation pneumatique (BC) configuré pour alimenter un dispositif de freinage (BD) qui peut être déclenché par l'alimentation pneumatique ;
- un premier moyen de compression (TC, CY ; CY') destiné à comprimer de l'air ;
- un deuxième moyen de compression (C, CY, CY') destiné à comprimer l'air comprimé par ledit premier moyen de compression (TC, CY ; CY') ;
- un premier moyen d'alimentation (L, L2, IM, LU) configuré pour aspirer l'air comprimé en aval dudit premier moyen de compression (TC, CY, CY') et fournir l'air comprimé aspiré audit deuxième moyen de compression (C, CY, CY') ;
- un deuxième moyen d'alimentation (L1, LU) configuré pour aspirer l'air comprimé en aval dudit deuxième moyen de compression (C, CY, CY') et fournir l'air comprimé aspiré au circuit d'alimentation pneumatique (BC) ;
dans lequel ledit deuxième moyen de compression (C, CY, CY') comprend un compresseur volumétrique (C) destiné à alimenter directement le circuit d'alimentation pneumatique (BC) ; ledit deuxième moyen d'alimentation (L1, LU) comprenant une première conduite d'alimentation (L1) qui relie pneumatiquement une évacuation du compresseur (C) au circuit d'alimentation pneumatique (BC) ;
**caractérisé en ce qu'**il comprend en outre :
- un dispositif de réception de gaz (T, IM, GL) différent du circuit d'alimentation pneumatique (BC) et adapté pour recevoir un gaz comprimé en vue de son utilisation ou de son stockage ;
- un troisième moyen d'alimentation (L3) configuré pour aspirer l'air comprimé en aval dudit deuxième moyen de compression (C, CY, CY') et fournir l'air comprimé aspiré au dispositif de réception de gaz (T, IM, GL),
dans lequel ledit troisième moyen d'alimentation (L3) comprend une troisième conduite d'alimentation qui relie pneumatiquement l'évacuation du compresseur (C) au dispositif de réception de gaz (T, IM, GL), de sorte que le dispositif de réception de gaz (T, IM, GL) puisse recevoir l'air qui provient du compresseur (C), dans lequel la première conduite d'alimentation (L1) comprend un régulateur de pression (PR1) destiné à réduire une première pression de l'air qui provient du compresseur (C) jusqu'à une deuxième pression inférieure à la première pression et adaptée pour le fonctionnement du circuit d'alimentation pneumatique (BC).

2. Appareil véhiculaire selon la revendication 1, dans lequel le moteur (ICE ; ICE') comprend une pluralité de cylindres (CY, CY') et dans lequel ledit premier moyen de compression comprend un pré-compresseur (TC) ;
le premier moyen d'alimentation (L, L2, IM, LU) comprenant une quatrième conduite d'alimentation (L) qui relie pneumatiquement une évacuation du pré-compresseur (TC) à au moins l'un des cylindres (CY ; CY') ;
le premier moyen d'alimentation (L2, IM, LU) comprenant, en outre, une deuxième conduite d'alimentation (L2) qui relie pneumatiquement une admission du compresseur (C) à la quatrième conduite d'alimentation (L).

3. Appareil véhiculaire selon la revendication 2, dans lequel la quatrième conduite d'alimentation (L) comprend un collecteur d'admission (IM) du moteur (ICE ; ICE') ; la deuxième conduite d'alimentation (L2) reliant l'admission du compresseur (C) au collecteur d'admission (IM).

4. Appareil véhiculaire selon l'une quelconque des revendications précédentes, comprenant en outre une conduite d'échappement (LTC) destinée à évacuer les gaz d'échappement du moteur (ICE ; ICE') ;
le premier moyen d'alimentation (L2, LU) comprenant une quatrième conduite d'alimentation (LU) qui relie pneumatiquement l'admission du compresseur (C) à la conduite d'échappement (LTC).

5. Appareil véhiculaire selon l'une quelconque des revendications précédentes, dans lequel la troisième conduite d'alimentation (L1) comprend une première soupape (V1) qui peut être pilotée afin d'ajuster un flux d'air qui provient du compresseur (C) et qui est dirigé vers le dispositif de réception de gaz (T, IM, GL).

6. Appareil véhiculaire selon la revendication 1, dans lequel le moteur (ICE ; ICE') comprend une pluralité de cylindres (CY, CY') qui font partie dudit deuxième moyen de compression (C, CY, CY').

7. Appareil véhiculaire selon l'une quelconque des revendications précédentes, dans lequel le dispositif de réception de gaz (T, IM, GL) comprend un ballon (T) destiné à stocker l'air comprimé par le deuxième moyen de compression (C, CY, CY').

8. Appareil véhiculaire selon la revendication 7, comprenant en outre une sixième conduite d'alimentation (L4) qui relie le ballon (T) à au moins un autre dispositif de réception de gaz (IM, GL), comprenant un dispositif utilisateur destiné à l'air stocké dans le ballon (T).

9. Appareil véhiculaire selon la revendication 8, dans lequel la sixième conduite d'alimentation (L4) comprend une deuxième soupape (V3, V4) qui peut être pilotée afin d'ajuster un flux d'air qui provient du ballon (T) et qui est dirigé vers le dispositif utilisateur.

10. Appareil véhiculaire selon la revendication 8 ou 9, dans lequel l'autre dispositif de réception de gaz (IM, GL) comprend un ensemble de liquéfaction de gaz (GL) destiné à la liquéfaction d'au moins un constituant de l'air.

11. Appareil véhiculaire selon l'une quelconque des revendications 8 à 10, dans lequel la sixième conduite d'alimentation (L4) comprend un autre régulateur de pression (PR2) destiné à réduire une troisième pression de l'air stocké dans le ballon (T) jusqu'à une quatrième pression inférieure à la troisième pression et adaptée pour alimenter le dispositif utilisateur.

12. Appareil véhiculaire selon l'une quelconque des revendications précédentes, dans lequel le moteur à combustion interne (ICE') est à cycle fractionné.

13. Appareil véhiculaire selon la revendication 12, dans lequel le moteur (ICE') comprend :
- au moins un vase d'expansion (CY) destiné à la combustion et à l'expansion d'un mélange d'air comprimé et de carburant ;
- au moins un vase de compression (CY') qui fait partie dudit premier moyen de compression (TC, CY') ; et
- une conduite de raccordement destinée à relier pneumatiquement le vase de compression (CY') au vase d'expansion (CY), de sorte que le vase d'expansion (CY) puisse recevoir l'air comprimé par le vase de compression (CY') ;
le premier moyen d'alimentation (L, L2, IM, LU) comprenant une septième conduite d'alimentation qui relie pneumatiquement le deuxième moyen de compression (C) à la conduite de raccordement, de sorte que le deuxième moyen de compression puisse être alimenté avec l'air comprimé qui circule dans la conduite de raccordement.

14. Appareil véhiculaire selon la revendication 12, dans lequel le moteur (ICE') comprend :
- au moins un vase d'expansion (CY) destiné à la combustion et à l'expansion d'un mélange d'air comprimé et de carburant ;
- au moins un vase de compression (CY') qui fait partie dudit deuxième moyen de compression (CY, CY') ; et
- une conduite de raccordement destinée à relier pneumatiquement le vase de compression (CY') au vase d'expansion (CY), de sorte que le vase d'expansion (CY) puisse recevoir l'air comprimé par le vase de compression (CY') ;
le deuxième moyen d'alimentation (L, L2, IM, LU) comprenant une huitième conduite d'alimentation qui relie pneumatiquement le circuit d'alimentation pneumatique (BC) à la conduite de raccordement, de sorte que le circuit d'alimentation pneumatique (BC) puisse être alimenté avec l'air comprimé qui circule dans la conduite de raccordement.

15. Véhicule (1) comprenant un appareil véhiculaire (VA ; VA') selon l'une quelconque des revendications précédentes.
